Europäisches Patentamt

(19) European Patent Office

Office européen des brevets

(11) Veröffentlichungsnummer: **0 227 854**
**B1**

(12) # EUROPÄISCHE PATENTSCHRIFT

(45) Veröffentlichungstag der Patentschrift:
09.05.90

(51) Int. Cl.⁵: **G05D 16/16**, F16K 1/12

(21) Anmeldenummer: 85116537.3

(22) Anmeldetag: 30.12.85

(54) **Druckmindervorrichtung.**

(43) Veröffentlichungstag der Anmeldung:
08.07.87 Patentblatt 87/28

(45) Bekanntmachung des Hinweises auf die Patenterteilung:
09.05.90 Patentblatt 90/19

(84) Benannte Vertragsstaaten:
AT BE CH DE FR GB IT LI LU NL SE

(56) Entgegenhaltungen:
CH-A- 315 977
CH-A- 440 889
DE-C- 445 422
DE-C- 3 124 371
GB-A- 2 002 497
US-A- 3 734 120

(73) Patentinhaber: Johannes Erhard, H. Waldenmaier Erben Süddeutsche Armaturenfabrik GmbH & Co.,
Postfach 1280, D-7920 Heidenheim(DE)

(72) Erfinder: Hochstatter, Josef, Dr., Buchberg 5,
D-7086 Neresheim-Ohmenheim(DE)

(74) Vertreter: Seeger, Wolfgang, Dipl.-Phys., SEEGER & SEEGER Patentanwälte & European Patent Attorneys
Georg-Hager-Strasse 40, D-8000 München 70(DE)

ACTORUM AG

## Beschreibung

Die Erfindung betrifft eine Druckmindervorrichtung mit durch das hindurchströmende Medium gesteuertem Absperrkörper der Absperr/Freigabe-Einrichtung, mit zwei in geringem Abstand voneinander ineinander angeordneten, relativ zueinander bewegbaren Körpern, von denen einer der Absperrkörper oder ein mit diesem verbundener Körper ist, und von denen einer in seinem Umfangsbereich Öffnungen aufweist, die mit zunehmender Bewegung des Absperrkörpers in die volle Öffnungsstellung zunehmend freigegeben werden.

Ein solches Druckminderventil ist aus der US 3 734 120 bekannt. Wird bei einem solchen Ventil der Absperrkörper aus seiner dichtenden Schließstellung heraus in Richtung auf die Öffnungsstellung bewegt, so tritt das Problem auf, daß der gesamte Ringflächenumfang des Absperrkörpers sich gleichzeitig aus der Berührung von dem als Weichdichtung ausgebildeten O-Ring in die Freigabestellung bewegt. Das hat zur Folge, daß für den Durchfluß abrupt eine Querschnittsfläche freigegeben wird, welche gleich dem Abstand einer beliebigen Stelle der dichtenden Ringfläche von der Weichdichtung multipliziert mit der Länge des Umfangs dieser Ringfläche ist. Dies ist der Grund, warum eine Armatur mit einer solchen Dichtung in jedem Falle sprunghaft auf einen Mindestdurchflußquerschnitt öffnet. Je größer der Abstand der äußeren Oberfläche des inneren Absperrkörpers zur inneren Oberfläche des äußeren Körpers ist, umso größer ist dieser Unstetigkeitspunkt zu Beginn der Öffnungsbewegung, weil auch der innere Körper relativ zum äußeren Körper bewegbar ist und zwischen den beiden Körpern Flüssigkeit hindurchdringt. Wenn der innere Körper direkt allseitig dichtend an der inneren Oberfläche des äußeren Körpers anliegen soll, tritt das Problem von sehr hohen Fertigungstoleranzen auf. Hinzu kommt, daß kleine Verunreinigungen zwischen beiden Körper bereits ein Verklemmen oder Festfressen der beiden Körper verursachen kann, so daß diese nicht mehr leichtgängig bewegbar sind.

Solche Druckminderventile werden in Wasserversorgungsleitungen eingesetzt, um auf der Entnahmeseite einen konstanten Wasserdruck aufrechtzuerhalten. Zu diesem Zweck ist eine mit dem eigenen Medium arbeitende Steuereinrichtung vorgesehen, welche dann, wenn aufgrund der Entnahme von Wasser auf der Entnahmeseite der Druck abfällt, den Absperrkörper aus seiner Schließstellung, in der er tropffest dichtend an dem Sitz der Absperr/Freigabe-Einrichtung sitzt, in Öffnungsrichtung verschiebt, damit von der Versorgungsseite aus Wasser zu der Entnahmeseite nachlaufen kann, bis dort wieder der gewünschte Druck herrscht.

Wird auf der Entnahmeseite viel Wasser in kurzer Zeit entnommen, so wächst auch die Druckdifferenz zwischen dem Vordruck und dem Hinterdruck, mit der Folge, daß der Absperrkörper von der Steuereinrichtung weiter aus seiner Sperr- oder Schließstellung entfernt wird, so daß ein größerer Durchflußquerschnitt freigegeben wird. Trotz aller vielfältigen bisherigen Bemühungen ist es jedoch bisher nicht gelungen, ein Druckminderventil zu schaffen, welches nicht nur gesteuert sondern geregelt würde, und insbesondere ist es nicht gelungen, ein Druckminderventil zu schaffen, welches den Hinterdruck auch bei kleinen Durchflüssen konstant zu halten vermag.

Diese Tatsache ist den Fachkreisen bekannt und sie ist auch in der Literatur festgehalten. So ist zum Beispiel auf der "International Conference on Developments in VALVES & ACTUATORS FOR FLUID CONTROL", die in Oxford, England vom 10-12 September 1985 stattfand und von BHRA, The Fluid Engineering Centre zusammen mit der British Valve Manufacturers Association und ferner von The Institution of Mechanical Engineers gesponsert wurde, in dem zusammenfassenden Übersichtsaufsatz "THE PERFORMANCE OF PRESSURE REDUCING VALVES" von J.H. May darauf hingewiesen, daß alle bekannten Druckminderventile bis zu einem gewissen Grade bei der Regelung eines gewünschten Ausgangsdruckes versagen, vgl. S. 3 unter "1.3.1 Controllability", Satz 1 der genannten Druckschrift.

Ferner ist in dieser Fachschrift auf Seite 4 unter "1.3.1 Rangeability", 2) auf das Problem des "Persistent hunting" hingewiesen, also darauf, daß sehr häufig der Zustand eines instabilen Betriebs auftritt, wenn ein Ventil mit geringer Strömungsgeschwindigkeit und hohen Druckabfällen arbeitet. Ferner ist auf Seite 12 unter "3. Hunting boundary" darauf hingewiesen, daß bei einigen Durchflußbereichen und Vordrücken stets das sogenannte "hunting", das man auch Pendeln oder Schwingen nennen kann, eintritt.

Dieses Problem des Hunting tritt praktisch bei allen bekannten Ventilen dann ein, wenn der Hinterdruck geringfügig unter den Sollwert abgefallen ist und nur wenig Wasser entnommen wird, so daß nur eine geringe Wassermenge von der Vordruckseite nachströmen soll. Sobald der Absperrkörper sich aus der Ventilsitzfläche entfernt und das Druckminderventil zu öffnen beginnt, baut sich für den Bruchteil von Sekunden ein zu hoher Druck auf der Abström- oder Hinterdruckseite auf, infolgedessen das Ventil sofort wieder in seine Absperrstellung zurückfährt. Wenn auf der Entnahmeseite weiterhin ständig Wasser mit geringer Strömungsgeschwindigkeit entnommen wird, fällt der Hinterdruck sofort wieder unter seinen Sollwert ab, so daß das Druckminderventil wieder öffnet, mit der Folge, daß sofort der Hinterdruck über seinen oberen Grenzwert ansteigt und die Steuereinrichtung den Absperrkörper sofort wieder in seine tropffeste Absperrstellung zurückbewegt. Bei verschiedenen bekannten Ventilen ist gemessen worden, daß der Absperrkörper bei geringer Wasserentnahme mit Frequenzen in der Größenordnung von etwa 0,1 bis 10 Hz oder mehr flattert. Man spricht in Fachkreisen deshalb bisweilen auch von "Waterhammer"-Ventilen. Eine Ventilbetätigung, bei welcher der Hinterdruck gleichmäßig auf einen mittleren Sollwert ansteigen kann, ist mit den bekannten Druckminderventilen nicht möglich.

Ferner ist darauf hinzuweisen, daß bei den bekannten Druckminderventilen dann, wenn Wasser mit geringer Geschwindigkeit entnommen wird, der Vordruck bisweilen kurzfristig voll auf die Entnahmeseite durchschlägt, was zum Platzen der Rohre auf der Entnahmeseite führen kann.

Aufgabe der Erfindung ist es, ausgehend von dem genannten Stand der Technik, eine Druckmindervorrichtung zu schaffen, welche die genannten Nachteile des Standes der Technik vermeidet und den Hinterdruck auch bei geringer Durchflußgeschwindigkeit konstant zu halten vermag.

Diese Aufgabe ist durch die Merkmale des Anspruchs 1 gelöst.

Die erfindungsgemäße Druckmindervorrichtung vermeidet die Probleme des Hunting im Moment der Öffnung des Absperr/Freigabe-Ventils, da die Ein- und Ausschaltschutzeinrichtung, welche durch den die Öffnungen aufweisenden Körper und das gleitbar an diesem Körper anliegende Dichtelement gebildet ist, zunächst noch geschlossen bleibt und erst dann, wenn die Absperr/Freigabe-Einrichtung bereits einen gewissen Durchflußquerschnitt freigegeben hat, zu öffnen beginnt. Die Freigabe eines Strömungsquerschnitts durch die Ein- und Ausschaltschutzeinrichtung beginnt sanft und stetig, auch bei beliebig geringer Flüssigkeitsentnahme.

Mit dieser erfindungsgemäßen Druckmindereinrichtung ist es möglich, den Hinterdruck bei beliebiger, auch bei beliebig geringer Durchflußgeschwindigkeit konstant zu halten. Ein Pendeln oder Hunting tritt bei der erfindungsgemäßen Vorrichtung nicht auf.

Ferner ist auch noch der Vorteil zu nennen, daß bei dem erfindungsgemäßen Ventil Kavitationsschäden vermieden werden. Da dieses Ventil besonders leichtgängig arbeitet, wird es schnell öffnen, so daß hohe Druckunterschiede nur selten auftreten. Da andererseits Kavitation nur bei hohen Druckunterschieden auftritt, wird sie bei der Verwendung dieses Ventils kaum eintreten. Aber selbst dann, wenn Kavitation eintreten sollte, werden die sonst üblichen Kavitationsschäden vermieden, da die Dampfblasen im Innern des Schlitzzylinders implodieren und dadurch keine Beschädigung der Wandung hervorrufen können.

Die Ein-Ausschalt-Schutzeinrichtung kann tropfdicht ausgebildet sein, muß es aber nicht.

Da die Öffnungen mit beliebiger Form ausgebildet und in beliebiger Weise angeordnet werden können, ist es möglich, sie so zu gestalten, daß sie aus der Schließstellung sanft in eine anfängliche Öffnungsstellung übergehen und eine stetige Zunahme des Durchflußquerschnitts freigeben. Aufgrund des sanft einsetzenden und mit minimalem Durchflußquerschnitt beginnenden Übergangs aus der Schließstellung und aufgrund der stetigen Zunahme dieses Durchflußquerschnitts wird das Problem des Pendelns oder Huntings vermieden.

Nach einer Weiterbildung der Erfindung kann das Dichtelement mit einem der Körper bewegbar sein. Zur Erzielung einer sanft einsetzenden Freigabe von Teilbereichen der Öffnungen muß somit lediglich einer der beiden Körper relativ zu dem anderen bewegt werden. Eine zusätzliche, individuelle Steuerung des Dichtelements ist deshalb nicht erforderlich.

Nach einer Weiterbildung der Erfindung ist einer der beiden Körper mit dem Sitz des Absperrkörpers der Absperr/Freigabe-Einrichtung und der andere Körper mit dem Absperrkörper starr verbunden. Diese Weiterbildung der Erfindung erübrigt in vorteilhafter Weise eine Steuerung der Bewegung der beiden Körper relativ zueinander, da mit der Bewegung des Absperrkörpers des Druckminderventils gleichzeitig und zwangsläufig auch die beiden Körper relativ zueinander bewegt werden.

Zweckmäßigerweise ist das Dichtelement quer zu dem Zwischenraum zwischen den beiden Körpern mit Spiel in dieser Querrichtung und gegen den anderen Körper anliegend vorgespannt. Diese Weiterbildung der Erfindung erlaubt es, die beiden Körper mit relativ großen Fertigungstoleranzen herzustellen. Eine möglichst gute Anlage beider Körper ist nicht zwingend erforderlich, weil ein Abstand zwischen den Körpern von dem Dichtelement überbrückt und damit abgedichtet wird. Aufgrund der Vorspannung des Dichtelementes werden ferner auch eventuell unterschiedlich große Abstände zwischen den Körpern, die auftreten, wenn diese sich relativ zueinander bewegen, stets ausgeglichen.

Die beiden Körper können längliche, sich in Strömungsrichtung erstreckende Körper sein; sie können auch zylindrich ausgebildet sein.

Nach einer anderen Ausführungsform der Erfindung ist der eine Körper ein Teil der Wandung der Druckmindervorrichtung und der andere Körper ein von dem Absperrkörper vorstehender Abschnitt. Diese Weiterbildung der Erfindung ermöglicht es, die erfindungsgemäße Druckmindervorrichtung sehr kompakt aufzubauen, so daß sie nicht mehr Platz als ein übliches Druckminderventil beansprucht. Diese Weiterbildung der Erfindung erlaubt ferner eine kostengünstige Herstellung, da die bei Druckminderventilen ohnehin vorhandenen Komponenten genutzt werden können und nur wenig zusätzliches Material erforderlich ist.

Die Ein- und Ausschaltschutzeinrichtung kann stromaufwärts von der Absperr/Freigabe-Einrichtung oder aber auch stromabwärts von der Absperr/Freigabe-Einrichtung angeordnet sein. Anders ausgedrückt, die erfindungsgemäße Vorrichtung kann sowohl in einer Richtung zur Strömung als auch in entgegengesetzter Richtung im Strömungsweg eingesetzt sein. Sowohl die eine als die andere Einbauweise ist je nach gewünschter Anwendungsweise vorteilhaft. In beiden Fällen wird eine sanft einsetzende und stetig zunehmende Freigabe des Flüssigkeitsstromes ermöglicht.

Das Dichtelement der Ein- und Ausschaltschutzeinrichtung kann nach einer anderen Weiterbildung der Erfindung ein in einer Nut des einen Körpers liegender, gegen den anderen Körper vorgespannter Ring sein. Diese Weiterbildung erlaubt eine besonders einfache und kostengünstige Herstellung, da sowohl die Ausbildung einer Nut als auch die Herstellung von Ringen serienmäßig üblich sind.

Nach einer bevorzugten Ausführungsform der Erfindung sind die Öffnungen in einem von dem Absperrkörper vorstehenden Abschnitt ausgebildet. Diese Weiterbildung ermöglicht es, serienmäßig hergestellte Druckminderventile mit besonders ausgebildeten Absperrkörpern zu verwenden. Auch dadurch wird eine kostengünstige Herstellung der erfindungsgemäßen Druckmindervorrichtung ermöglicht.

Dieser Ring kann gegen die gegenüberliegende Umfangsfläche des anderen Körpers, an dieser gleitend anliegend vorgespannt sein. Aufgrund dieser Vorspannung werden die bei der Relativbewegung beider Körper auftretenden unterschiedlichen Abstände zwischen diesen ausgeglichen. Diese Ausführungsform ermöglicht es somit, die Körper mit relativ großen Fertigungstoleranzen herzustellen, und trotzdem ein Druckminderventil mit sanft einsetzendem und stetig wachsend regelbarem Durchflußquerschnitt herzustellen.

Das Dichtelement kann ein beliebig geformter, geeigneter Ring, z.B. ein geschlitzter massiver Ring oder ein aus mehreren zylindrisch gewickelten Lagen bestehender Ring sein. Solche Dichtringe sind im Handel erhältlich.

Die Öffnungen können zum Dichtelement hin sich verjüngend ausgebildet sein.

Vorteilhafterweise sind die dem Dichtelement zugewandten Ränder verschiedener Öffnungen in verschiedenem Abstand von dem Dichtelement angeordnet. Auch dieses Merkmal trägt dazu bei, einen besonders sanften Übergang aus der Schließstellung heraus zu ermöglichen. Nach einer weiteren Ausführungsform sind die Öffnungen derart ausgebildet, daß die von dem Dichtelement freigegebene Querschnittsfläche mit zunehmender Öffnungsbewegung beispielsweise exponentiell zunimmt.

Die Erfindung ist jedoch nicht auf Druckmindervorrichtungen beschränkt. Aufgabe der Erfindung ist es weiterhin, ganz allgemein eine Einrichtung zum Öffnen mit sanft beginnender Freigabe und stetiger Zunahme eines Strömungsquerschnitts und zum Schließen mit stetiger Abnahme des Strömungsquerschnitts zu schaffen.

Diese Aufgabe ist durch die Merkmale des Anspruchs 18 gelöst.

Die Erfindung weist eine erstaunliche Vielzahl von Vorteilen auf:

Zunächst ist der Vorteil zu nennen, daß dieses Ventil mit beliebig sanft einsetzender Durchflußfreigabe herstellbar ist. Dieser Vorteil ist auf die Tatsache zurückzuführen, daß die Öffnungen mit beliebig gewünschten Formen ausgebildet werden können. Es ist also möglich, auch bei vorgegebener Relativgeschwindigkeit beider Körper zueinander beliebig kleine Durchflußquerschnittsflächen einzustellen und auch beliebig langsame und vor allem stetige Zunahmegeschwindigkeiten der Freigabe der Durchflußquerschnitte.

Ein anderer Vorteil der Erfindung ist darin zu sehen, daß derartige Ventile besonders reibungsarm arbeiten und mit besonders geringen Kräften einstellbar und regelbar sind. Dieser Vorteil liegt darin begründet, daß die beiden Körper nicht direkt aneinander anliegen sondern nur das Dichtelement mit einer kleinen Oberfläche an einem der beiden Körper gleitend anliegt.

Ein weiterer, besonders wichtiger Vorteil der Erfindung ist die Tatsache, daß sie die Herstellung von Ventilen mit relativ großen Fertigungstoleranzen ermöglicht. Wenn die beiden erforderlichen Körper mit relativ großen Fertigungstoleranzen hergestellt sind, wird ihr Abstand voneinander nicht immer gleich groß sein sondern je nach relativer Lage beider Körper zueinander verschieden groß sein. Solch ein Abstandsunterschied wird jedoch von dem vorgesehenen Dichtelement überbrückt, so daß dadurch das Ventil in seiner Dichtheit nicht beeinflußt wird.

Ein weiterer Vorteil der Erfindung liegt darin, daß sie die Herstellung von Ventilen mit geringen Kosten ermöglicht, weil herkömmliche Dichtelemente zur Überbrückung des Abstands zwischen den beiden Körpern verwendet werden können.

Ein solches Ventil kann durch einfache Anordnung verschiedener Steuereinrichtungen und Dämpfungen für viele verschiedene Zwecke verwendet oder eingesetzt werden, zum Beispiel als:
vorgesteuertes Schwimmerventil
vorgesteuerter Rückflußverhinderer
Vorgesteuertes Überströmventil
vorgesteuerter Durchflußregler
vorgesteuertes Altitude-Ventil (Niveauregler)
Vorgesteuertes 2/2-Wegeventil
vorgesteuertes Druckminderventil mit Durchflußbegrenzung

Ganz allgemein eignet sich dieses Ventil besonders vorteilhaft für alle Einsätze, bei denen eine häufige und/oder stetige, stoßfreie Änderung des Durchflußquerschnitts erwünscht ist, und auch bei solchen Ventilen, bei denen nur relativ geringe Steuerkräfte zur Verfügung stehen.

Nach einer Weiterbildung der Erfindung ist das Dichtelement mit einem der Körper bewegbar und an dem anderen, die Öffnungen aufweisenden Körper gleitbar anliegend angeordnet. Zur sanft einsetzenden Freigabe von Teilbereichen der Öffnungen reicht es, einen der beiden Körper relativ zu dem anderen zu bewegen. Eine zusätzliche, individuelle Steuerung des Dichtelementes ist deshalb nicht erforderlich.

Zweckmäßigerweise ist das Dichtelement quer zu dem Zwischenraum zwischen den beiden Körpern mit Spiel und gegen den anderen Körper anliegend vorgespannt. Diese Weiterbildung der Erfindung erlaubt es, die beiden Körper mit größeren Fertigungstoleranzen herzustellen. Eine möglichst gute Anlage beider Körper ist nicht zwingend erforderlich, weil auch ein sich ändernder Abstand zwischen den Körpern von dem vorgespannten Dichtelement überbrückt und damit abgedichtet wird. Aufgrund der Vorspannung des Dichtelementes werden ferner auch eventuell unterschiedlich große Abstände zwischen den Körpern, die auftreten, wenn diese sich relativ zueinander bewegen, stets überbrückt und ausgeglichen.

Die beiden Körper können längliche, sich in Strömungsrichtung erstreckende Körper sein; sie können zylindrisch ausgebildet sein.

Das erfindungsgemäße Ventil kann sowohl in einer Richtung zur Strömung als auch in entgegengesetzter Richtung im Strömungsweg eingesetzt sein. Sowohl die eine als die andere Einbauweise ist, je nach gewünschter Anwendungsweise vorteilhaft. In beiden Fällen wird eine sanft einsetzende und stetig zunehmende bzw. abnehmende, stoßfreie Änderung des Durchflußquerschnitts ermöglicht.

Das Dichtelement kann nach einer anderen Weiterbildung der Erfindung ein in einer Nut des einen Körpers liegender, gegen den anderen Körper vorgespannter Ring sein. Diese Weiterbildung erlaubt eine besonders einfache und kostengünstige Herstellung, da sowohl die Ausbildung einer Nut als auch die Herstellung von Ringen serienmäßig üblich sind.

In einer Nut des einen Körpers kann ein Vorspannelement, zum Beispiel ein O-Ring angeordnet sein, der den Ring gegen den anderen Körper hin vorspannt . Eine solche Dichtung ist einfach und auch besonder preisgünstig herstellbar.

Das Dichtelement kann ein beliebig geformter, geeigneter Ring, z.B. ein geschlitzter massiver Ring oder ein aus mehreren zylindrisch gewickelten Lagen bestehender Ring sein. Solche Dichtringe werden in sehr großen Stückzahlen gefertigt und sind im Handel erhält. Die Öffnungen können zum Dichtelement hin sich verjüngend ausgebildet sein.

Vorteilhafterweise sind die dem Dichtelement zugewandten Ränder verschiedener Öffnungen in verschiedenem Abstand von dem Dichtelement angeordnet. Auch dieses Merkmal trägt dazu bei, einen besonders sanften Übergang aus der Schließstellung heraus zu ermöglichen. Nach einer weiteren Ausführungsform sind die Öffnungen derart ausgebildet sind, daß die von dem Dichtelement freigegebene Querschnittsfläche mit zunehmender Öffnungsbewegung beispielsweise exponentiell zunimmt.

Weitere Vorteile und Merkmale der Erfindung gehen aus den Ansprüchen in Verbindung mit der Beschreibung und der Zeichnung hervor. In letzterer zeigen:

Fig. 1 eine erfindungsgemäße Druckmindervorrichtung mit Ein- und Ausschaltschutzeinrichtung in Schließstellung,

Fig. 2 ein vergrößertes Detail einer erfindungsgemäßen Ein- und Ausschaltschutzvorrichtung,

Fig. 3 eine Druckmindervorrichtung mit Ein- und Ausschaltschutzeinrichtung wie in Fig. 1, jedoch in geöffneter Stellung,

Fig. 4 eine andere Ausführungsform eines Ventils mit Ein- und Ausschaltschutzeinrichtung in geschlossener Stellung,

Fig. 5 eine vergrößerte Ansicht eines Teils der Ein- und Ausschaltschutzvorrichtung der Figur 4,

Fig. 6 das Teil der Ein- und Ausschaltschutzvorrichtung, welches in Figur 5 dargestellt ist, jedoch in geöffneter Stellung,

Fig. 7 ein Ringkolbenventil mit einer anderen Ausführungsform der erfindungsgemäßen Ein- und Ausschaltschutzeinrichtung, in geschlossener Stellung,

Fig. 8 die Ein- und Ausschaltschutzvorrichtung der Figur 7, jedoch in geöffneter Stellung,

Fig. 9 und 10 Zylinder mit verschiedenen Schlitzformen.

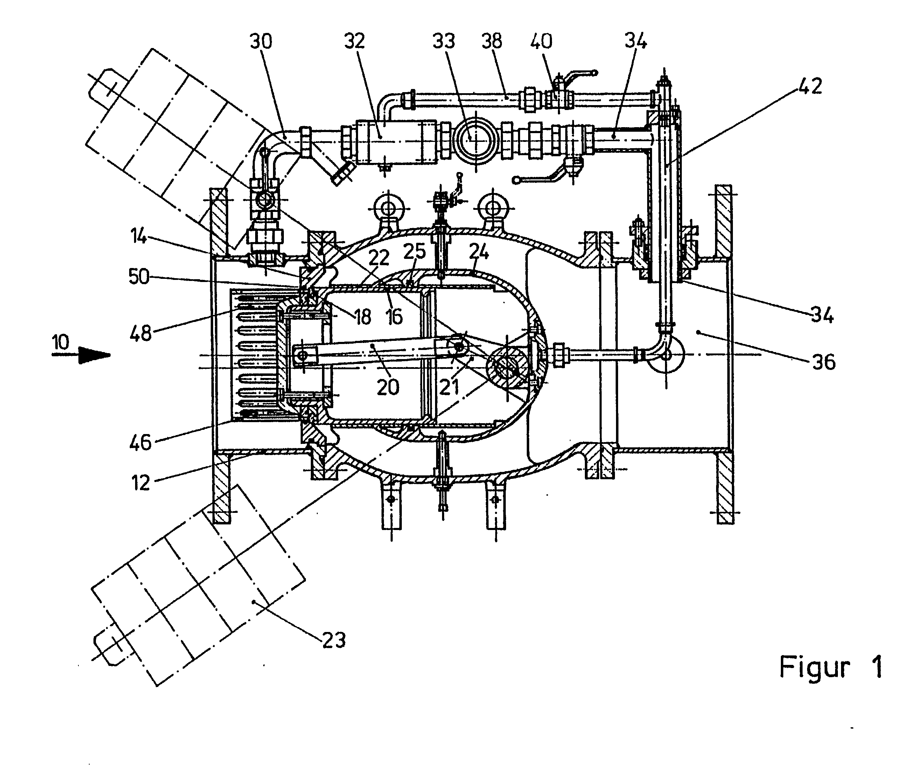

Die Figur 1 zeigt eine Druckmindervorrichtung mit der Ein- und Ausschaltschutzvorrichtung gemäß der vorliegenden Erfindung. Das Strömungsmedium soll, wie der Pfeil 10 es andeutet, von der linken Seite zur rechten Seite strömen. Der eingangsseitige Abschnitt dieser Druckmindervorrichtung ist von einer Seitenwand 12 umgeben, die in Durchflußrichtung begrenzt ist durch einen Sitzring 14, gegen den von der stromabwärtigen Seite ein Ringkolben 16 anliegt, der mit einer Weichdichtung 18, die in weiteren Figuren, die noch beschrieben werden, vergrößert und anschaulicher dargestellt ist, abgedichtet ist. Der Ringkolben 16 kann mittels einer Schubstange 20 in Schließ- und in Öffnungsrichtung bewegt werden. Bei dieser Bewegung wird der Ringkolben innerhalb mehrerer Führungsleisten 22, die an dem Kolbengehäuse 24 an mehreren Stellen befestigt sind, geführt.

Von dem Eingangsabschnitt der Druckmindervorrichtung führt eine Nebenleitung 30 über eine Strahldüse 32, ein Vorsteuerventil 33 und ein Rohr 34 zu dem Abströmaschnitt 36 der Druckmindervorrichtung. Von der Strahldüse 32 aus führt eine weitere Leitung 38 über ein Drosselventil 40 und eine Rohrleitung 42 in den Innenraum des Kolbengehäuses 24. Diese Leitungen und Ventile 30 bis 42 dienen als Steuereinrichtung für die gesamte Druckmindervorrichtung. Wenn der Hinterdruck in dem Abströmungsabschnitt 36 der Druckmindervorrichtung unter einen vorbestimmten Sollwert abfällt, öffnet das Vorsteuerventil. Durch die Wirkung der durchflossenen Steuerdüse 32 fällt der Druck im Kolbenraum ab und der Kolben des Ringkolbenventils öffnet bis zum Gleichgewichtszustand. Aufgrund der Druckdifferenz zwischen Vordruck und Hinterdruck wird der Ringkolben 16 nach rechts in seine Öffnungsstellung verfahren, so daß das Strömungsmedium von der Vordruckseite nachströmen kann. Bei einer starken Druckdifferenz, fließt ein stärkerer Strömungsmittelstrom durch die Strahldüse 32, der, infolge der erhöhten Strömungsgeschwindigkeit über die Rohrleitung 42, das Drosselventil 40 und die Rohrleitung 38 innerhalb des Kolbengehäuses 24, welches durch eine Dichtung 25 gegenüber dem Innenraum der Druckmindervorrichtung abgedichtet ist, eine Druckabsenkung im Kolbeninnenraum bewirkt, die den Ringkolben 16 nach rechts in die Öffnungsstellung verfährt. Wenn der Hinterdruck auf seinen gewünschten Sollwert angestiegen ist, wird, entsprechend der Voreinstellung, die Geschwindigkeit der Strömung durch die Strahldüse 32 so stark abnehmen, daß über die Leitung 38, das Drosselventil 40 und die Leitung 42 kein Strömungsmittel aus dem Innenraum des Ringkolbengehäuses 24 mehr entnommen wird. Infolgedessen wird der Ringkolben 16, der mit einem Gewicht 23 vorgespannt ist, über Kolbenhebel 21 und die Schubstange 20 wieder in seinem Gleichgwichtszustand gehalten.

Bei bekannten Druckminderventilen tritt beim Ein- und Ausschalten, insbesondere wenn nur geringe Flüssigkeitsmengen oder Strömungsmittelmengen entnommen werden, stets ein Flattern oder "Hunting" beim Ein- und Ausschalten auf. Um dieses zu vermeiden ist gemäß der Erfindung eine Ein- und Ausschaltschutzvorrichtung vorgesehen, die im folgenden, sowohl anhand der Figur 1 als auch, insbesondere in Verbindung mit mehreren Einzelheiten, in den anderen Figuren näher beschrieben sind.

In Figur 1 sieht man einen von dem Ringkolben 16 zur Anströmseite hin vorstehenden Zylinder 46, welcher verschiedene Schlitze 48 aufweist. An seinem dem Ringkolben 16 zugewandten, also inneren Ende, ist der Schlitzzylinder 46 von einem gleitend an ihm anliegend und gegen ihn vorgespannten Kolbenring 50 umgeben, der in einer Nut angeordnet ist, die an der Innenseite des Sitzringes 14 und zwar stromaufwärts von der Sitzfläche am Sitzring 14 angeordnet ist.

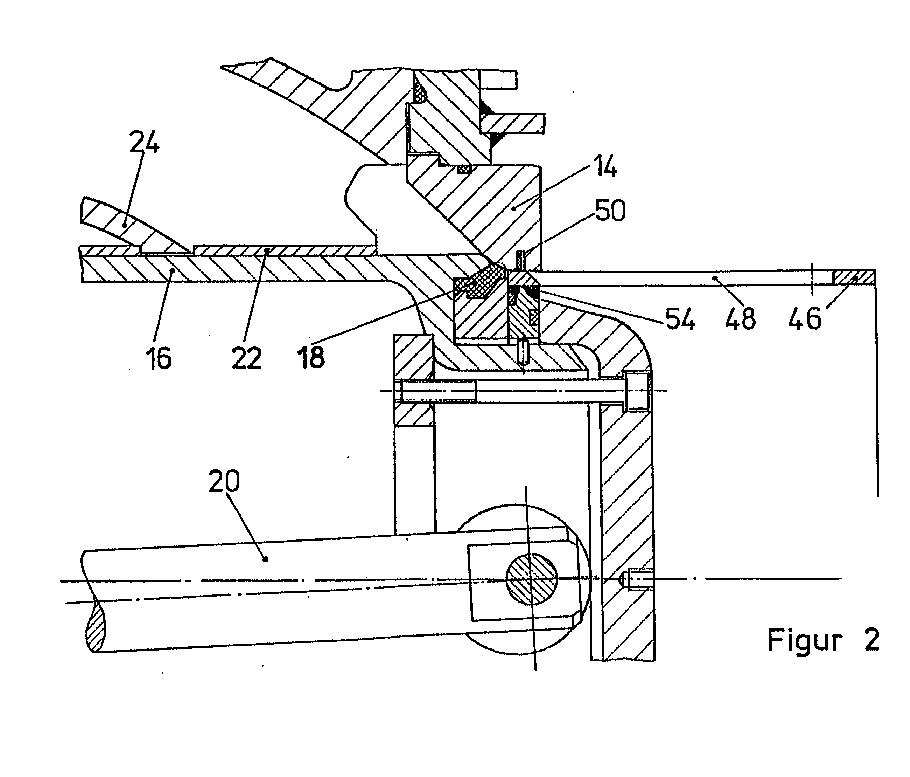

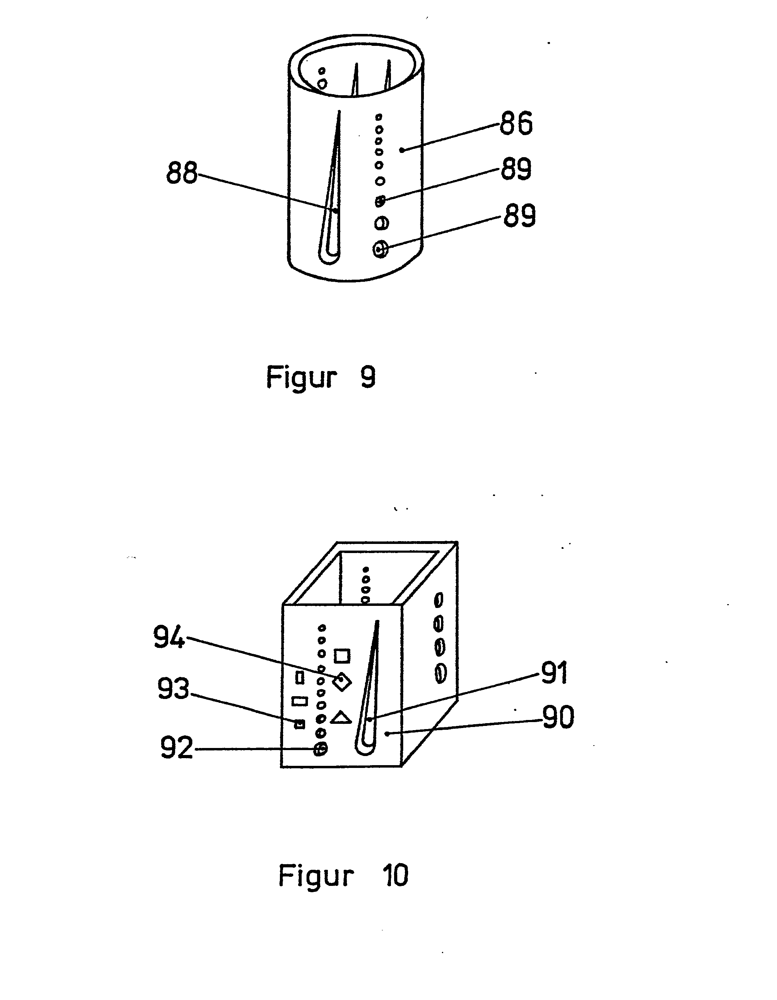

Die Figur 2 zeigt eine vergrößerte Teilansicht der erfindungsgemäßen Ein- und Ausschaltschutzvorrichtung. Wie man in dieser Figur 2 sieht, ist in dem Ringkolben 16, der in den Führungsleisten 22 gleitbar angeordnet ist, eine übliche Weichdichtung 18 vorgesehen, die beim Schließen des Ringkolbens mittels der Schubstange 20 gegen den Sitzring 14 gedrückt wird, in dieser Figur 2 also nach rechts. An der rechten Stirnseite des Kolbenringes, in der Nähe der Weichdichtung 18, ist der Schlitzzylinder 46 gleichsam in Verlängerung des Ringkolbens 16 befestigt, z. B. angeschweißt. Dieser Schlitzzylinder 46 weist die Schlitze 48 auf, die in den Figuren 9 und 10 noch ausführlich dargestellt und anhand dieser Figuren beschrieben werden. In dem Sitzring 14 sieht man einen Ring 50, der ein üblicher Kolbenring sein kann, wie er bei Automotoren verwendet wird. Dieser Dichtring 50 ist von dem Sitzring 14 radial nach innen hin vorgespannt, so daß er stets an dem Außenumfang des Schlitzzylinders 46 gleitend anliegt.

In der in Figur 2 gezeigten Stellung ist der Ringkolben 16 in seine rechte Endlage gefahren, in welcher die Weichdichtung 18 dichtend an dem Sitzring 14 anliegt. Dadurch ist die Druckmindervorrichtung vollständig geschlossen, so daß der Dichtring 50 und die Schlitze 48 des Schlitzzylinders 46 gar nicht zur Wirkung kommen.

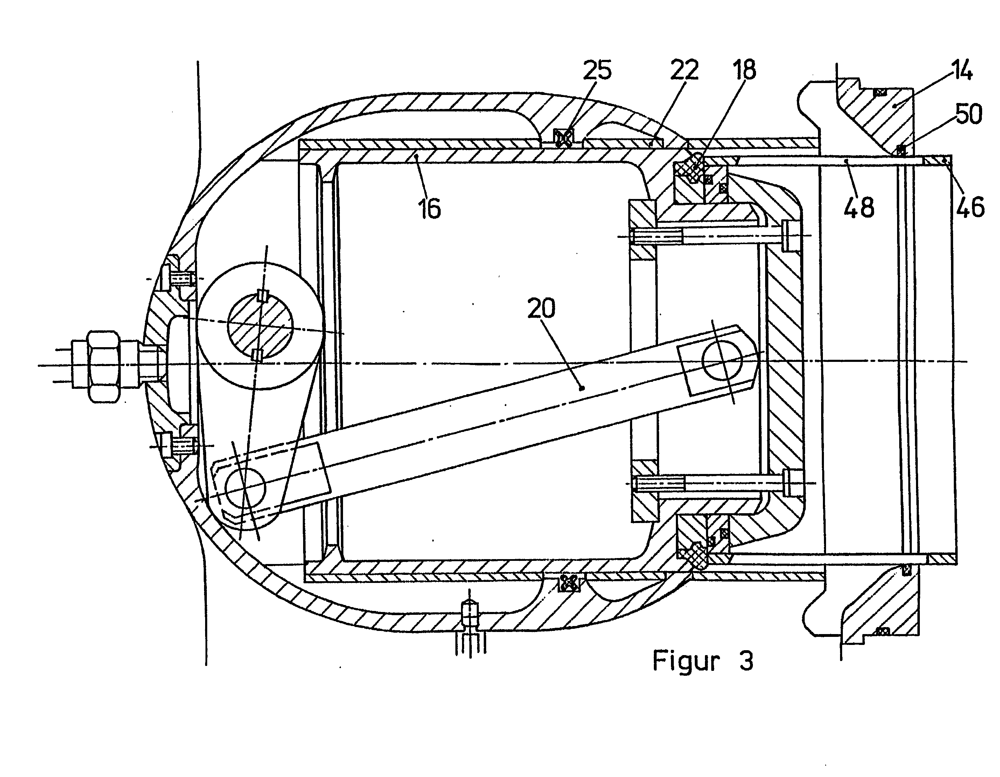

Die Figur 3 zeigt eine der Figur 2 gleiche Ausführungsform, jedoch in geöffneter Stellung.

Der Ringkolben 16 ist gegenüber der Stellung in Figur 2 nach links verfahren; das äußere Ende des Schlitzzylinders 46 immer noch nach rechts über die Lage des Sitzringes 14 hinaus erstreckt. Der Kolbenring 50 liegt somit an dem äußeren Umfang des Schlitzzylinders 46 an.

In dieser Stellung befinden sich die Schlitze 48 zumindest teilweise zwischen dem dichtend anliegenden Kolbenring 50 und der Vorderseite des Ringkolbens 16. Durch diese Schlitze 48 kann Strömungsmittel hindurchströmen.

Bei den bekannten Druckmindervorrichtungen trat das Problem auf, daß bereits mit ganz geringfügigem Öffnen der Druckmindervorrichtung, d. h. wenn der als Absperrkörper dienende Kolben mit geringfügig aus seiner absolut dichtenden Stellung heraus verfahren wurde, sofort und zwangsläufig ein zu starker Druck auf die Hinterdruckseite weitergeleitet wurde. Wie der Erfinder herausgefunden hat, lag dies daran, daß zwangsläufig ein zu großer Strömungsquerschnitt freigegeben wurde. Dies wiederum lag zum einen daran, daß der Absperrkörper eine ringförmigen Durchflußfäche längs dem gesamten Umfang der Sitzfläche freigab. Ferner kam noch hinzu, daß bei vielen Ventilen, aufgrund der Öffnung ein zusätzlicher Strömungsmitteldruck auf die Weichdichtung ausgeübt wurde, diese verformt und damit zwangsläufig, gerade im Moment des ersten Öffnens, wenn also nur ein sehr kleiner Ringspalt freigegeben werden sollte, diesen auch noch vergrößerte.

Diese beiden Effekte, die zu dem bekannten Flattern führten und sogar Zerstörungen des Rohrnetzes auf der Hinterdruckseite zu Folge haben konnten, sind bei Verwendung der erfindungsgemäßen Ein- und Ausschaltschutzvorrichtung völlig vermieden. Wenn der Ringkolben 16 mit der Weichdichtung 18 geringfügig aus der Sperrstellung in Richtung Öffnungsstellung verfahren wird, so daß ein schmaler Ringspalt zwischen Weichdichtung 18 und Sitzring 14 freigegeben wird, befindet sich die Ein- und Ausschaltschutzeinrichtung noch in ihrer Schließstellung. Erst mit weiterer Bewegung des Ringkörpers 16 setzt die Öffnung der Ein- und Ausschaltschutzvorrichtung ein, und zwar erst dann, wenn die dem als Absperrkörper dienenden Ringkolben 16 zugewandten nächsten Ränder der Schlitze oder Öffnungen des Schlitzzylinders an dem Kolbenring 50 vorbeigleiten.

Es ist im Rahmen der vorliegenden Erfindung auch möglich, den Schlitzzylinder so kurz zu bemessen, daß sein freies Ende, in geöffneter Stellung, einen Abstand zu dem Dichtelement aufweist.

Selbstverständlich ist es möglich, die Schlitze oder Öffnungen beliebig zu gestalten, wie weiter unten noch beschrieben werden wird. Es ist zunächst festzuhalten, daß grundsätzlich die Möglichkeit besteht, solche Öffnungen nicht um den gesamten Umfang sondern nur um Teile desselben auszubilden. So ist es z. B. im einfachsten Falle möglich, Öffnungen auszubilden, welche in Richtung des Ringkolbens 16 hin spitz zulaufen und sich zum vom Ringkolben abgewandten Ende hin unter einem festen Winkel oder mit zunehmendem Querschnitt verbreitern. Für eine besonders weiche und sanft einsetzende Öffnung ist es auch möglich, die dem Ringkolben 16 zugewandten spitzen Enden der Schlitze 48 versetzt anzuordnen, so daß zunächst nur die spitzen Enden von ein, zwei oder drei Schlitzen freigegeben werden und mit zunehmender Bewegung des Ringkolbens 16 in Öffnungsrichtung, und damit gekoppelter zunehmender Bewegung des Schlitzzylinders 46 in Öffnungsrichtung, nicht nur die zunehmend breiteren Querschnitte der bereits teilweise freigegebenen Schlitze 48 freigegeben werden, sondern darüber hinaus zusätzliche, zwischen den ersten Schlitzen angeordnete weitere Öffnungen, die Schlitzform oder auch andere Formen haben können.

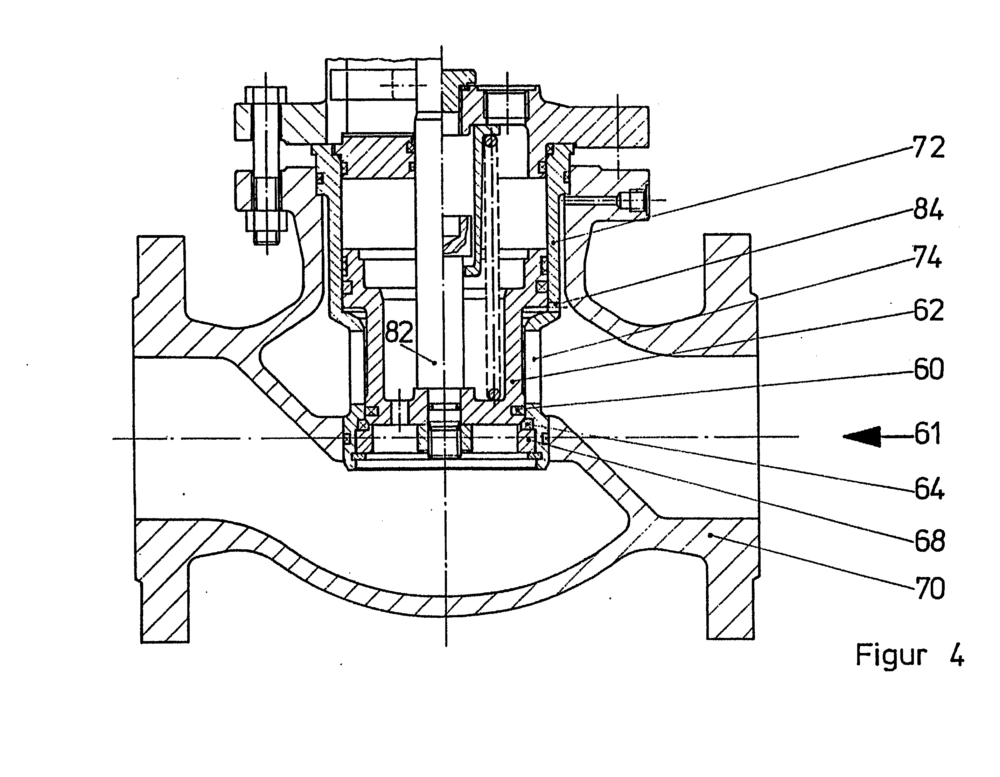

Die Figuren 4, 5 und 6 zeigen eine Ausführungsform der erfindungsgemäßen Ein- und Ausschaltschutzeinrichtung in Verbindung mit einem Ventil, bei welchem der Absperrkolben im wesentlichen quer zur Hauptströmungsrichtung verfahren wird. Das Ventil selber kann ein Druckminderventil sein, welches durch das Eigenmedium gesteuert wird, es kann aber auch ein beliebiges anderes Ventil sein, welches zum Beispiel elektromagnetisch gesteuert wird.

Auch bei dieser Ausführungsform werden Merkmale, die nicht zum Wesen der vorliegenden Erfindung gehören, auch wenn sie in der Zeichnung dargestellt sind, zum Teil nicht beschrieben.

In den Figuren 4 bis 6 soll ein Strömungsmittel z.B. von rechts nach links strömen, wie es durch den Pfeil 61 angedeutet ist. In der Figur 4 ist das Ventil in seiner Absperrstellung dargestellt. Der als Absperrkörper dienende Kolben 62 ist in seine untere Endstellung verfahren, in welcher sein unterer Rand dichtend an einer Weichdichtung 64 anliegt, die zwischen einem Sitzring 68 und einer Schlitzbuchse 72 angeordnet ist. Dieser Sitzring 68 befindet sich innerhalb eines Gehäuses 70, welches in einem Bereich oberhalb des Sitzringes 68 Durchbrüche 74, zum Beispiel Schlitze aufweist.

In einer Nut im unteren Endabschnitt des Kolbens 62 ist ein Kolbenring 60 gelagert, der in radialer Richtung Spiel hat und gegen die innere Umfangsfläche der Schlitzbuchse 72 vorgespannt ist. Wie man in dieser Figur 4 sieht befindet sich der Kolbenring 60 dann, wenn der Kolben sich in seiner unteren Endstellung befindet, unterhalb der unteren Enden der Durchbrüche 74. Dieser derartig angeordnete Kolbenring bildet in Verbindung mit den Durchbrüchen 74 in der Schlitzbuchse die erfindungsgemäße Ein- und Ausschaltschutzvorrichtung.

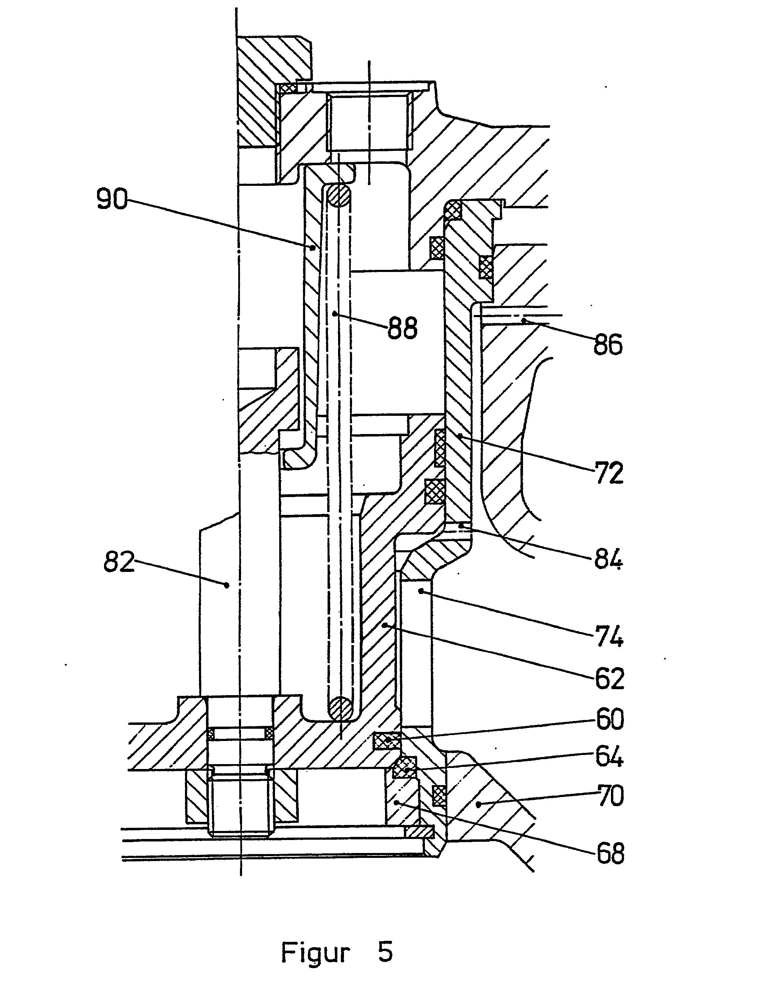

Die Figur 5 zeigt einen Teil der Figur 4 in vergrößerter Darstellung, ebenfalls in der Absperrstellung. In dieser Figur sieht man deutlich, daß der Kolbenring 60 sich unterhalb des unteren Endes der Öffnungen 74, die in der Schlitzbuchse 72 ausgebildet sind, befindet. Selbst wenn in dieser Stellung die Weichdichtung entnommen wäre, würde der Ringkolben zusammen mit der Schlitzbuchse den Durchfluß des Strömungsmittels verhindern. Es ist deshalb auch möglich, je nach Verwendungszweck, die erfindungsgemäße Ein- und Ausschaltschutzeinrichtung ohne einen an der Sitzfläche zur Anlage kommenden Absperrkörper zu verwenden. In diesem Fall muß die Einschalt- und Ausschaltschutzeinrichtung tropfdicht sein.

Weitere Einzelheiten dieser Figur wie die Spindel 82, eine Feder 88 mit Federführung 90 und Entlüftungsöffnungen 84 und 86 werden nicht weiter beschrieben.

Wie man in Figur 5 sieht, bleibt die Ein- und Ausschaltschutzeinrichtung auch dann noch geschlossen, wenn der Kolben 62 aus seiner unteren, vollständig absperrenden Endstellung geringfügig nach oben verfahren worden ist, so daß zwischen dem unteren Kolbenrand und der Weichdichtung 64 ein Ringspalt freigegeben worden ist.

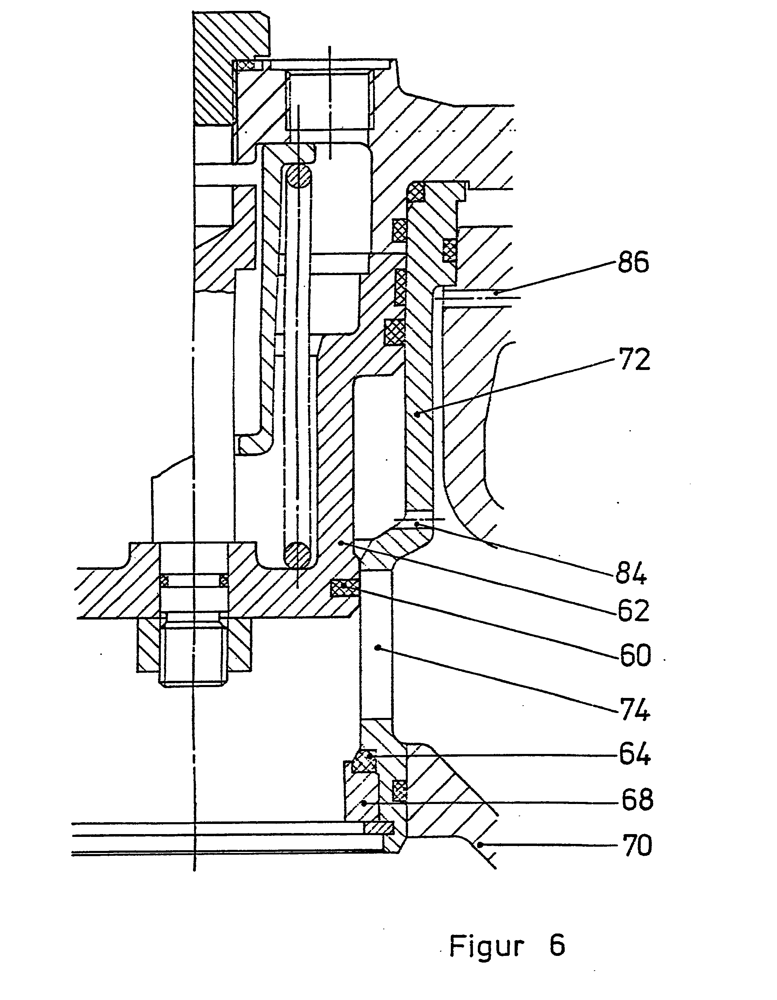

Die Figur 6 zeigt das Ventil der Figuren 5 und 6 in seiner vollständig geöffneten Stellung. In der gezeigten oberen Endstellung gibt der Kolben 62 die von dem Sitzring umschlossene Ringfläche vollständig frei. Der Kolben 62 ist in der Schlitzbuche 72 so weit nach oben verfahren worden, daß der Kolbenring 60 der an dem inneren Umfang der Schlitzbuchse 72 anliegt, die größte Länge der Schlitze 74 freigibt, so daß der gewünschte Durchfußquerschnitt freigegeben ist.

Das Ventil der Figuren 4 bis 6 kann auch in umgekehrter Richtung arbeiten.

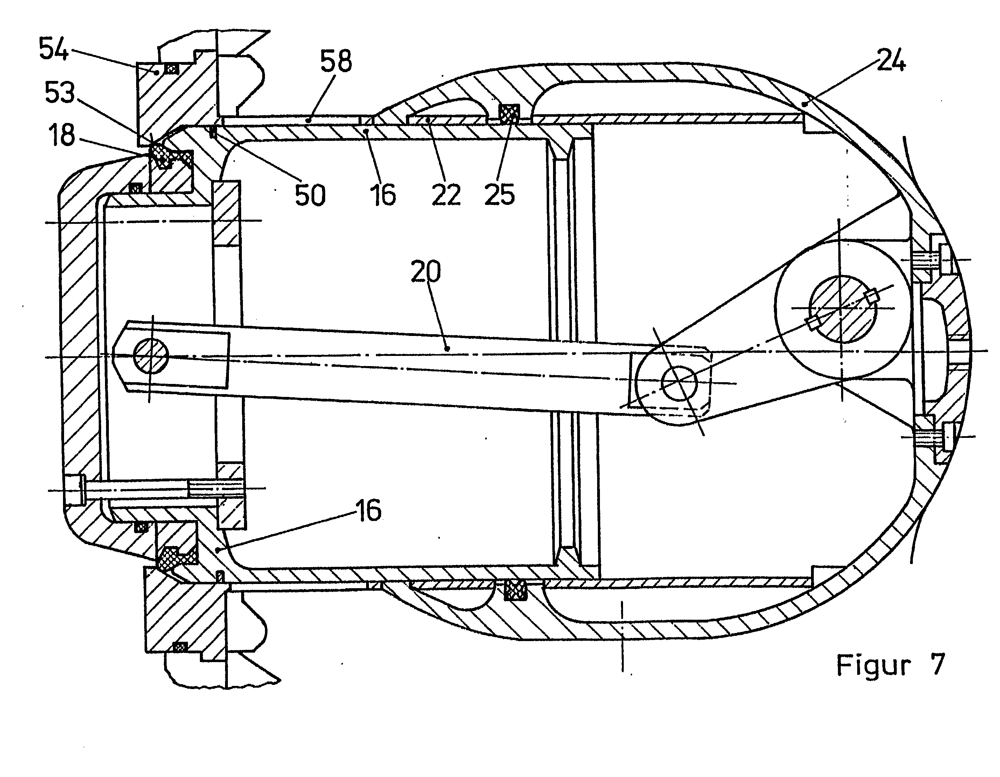

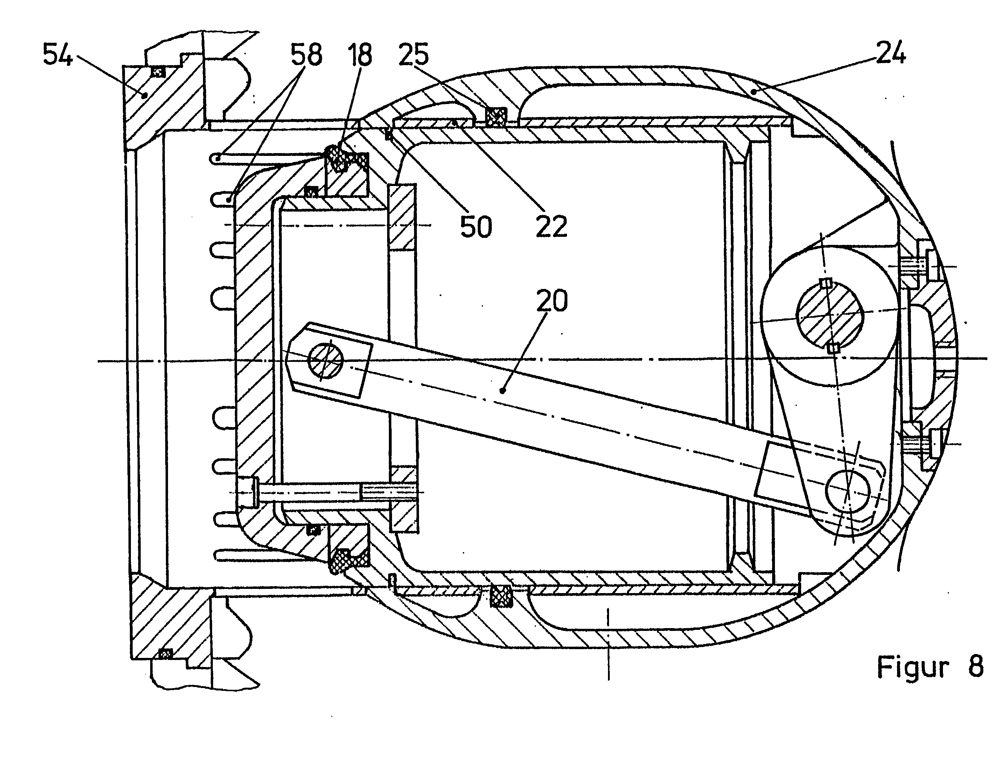

In den Figuren 7 und 8 ist eine andere Ausführungsform einer erfindungsgemäßen Ventils mit Ein- und Ausschaltschutzeinrichtung dargestellt, und zwar in Figur 7 in geschlossener Stellung und in Figur 8 in geöffneter Stellung. Bauteile, die mit der Ausführungsform der Figuren 1 bis 3 identisch sind, tragen gleiche Bezugszeichen.

In der Figur 7 sieht man wiederum einen als Absperrkörper dienenden Ringkolben 16, der mittels einer Schubstange 20 verfahrbar ist. In dem stirnseitigen Endabschnitt des Ringkolbens 16 ist eine Weichdichtung 18 angeordnet, welche in der dargestellten Schließstellung dicht an einer Sitzfläche 53 einer Sitzringschlitzbuchse 54 anliegt. Diese Sitzring-Schlitzbuchse 54 unterscheidet sich von dem Sitzring 14 der Figuren 1 bis 3 im wesentlichen darin, daß sie sich buchsenartig zum Gehäuse 24 des Ringkolbens 16 hin erstreckt. In diesem Buchsenabschnitt, der gleichzeitig als Führung des Ringkolbens 16 dient, sind Schlitze 58 angeordnet. Ferner ist auch bei dieser Ausführungsform wiederum ein Kolbenring 50 vorgesehen, welcher diesmal jedoch in einer Nut am Außenumfang des Ringkolbens 16 angeordnet ist.

Wie man in dieser Figur 7 sieht, befindet sich der Kolbenring 50 dann, wenn der Ringkolben sich in seiner Absperrstellung befindet, innerhalb des Sitzringabschnitts der Sitzring-Schlitzbuchse 54. Der Kolbenring 50 befindet sich zwischen der Weichdichtung 18 und dem der Weichdichtung zugewandten Ende der Schlitze 58. In dieser Sperrstellung übt der Kolbenring 50 keine Schutzfunktion aus.

Wird jedoch der Ringkolben 16 aus der dargestellten Sperrichtung verfahren, so bildet sich zunächst ein Ringspalt zwischen der Weichdichtung 18 und der Sitzfläche 53 der Sitzring-Schlitzbuchse 54. Aber selbst wenn dieser Ringspalt bereits freigegeben ist, befindet sich der Ringkolben 16 immer noch innerhalb des Sitzringabschnitts der Sitzring-Schlitzbuchse 54, d. h. immer noch vor dem der Weichdichtung 18 zugewandten Ende des Schlitzes 58. Selbst bei leicht geöffnetem Ringspalt zwischen Weichdichtung 18 und Sitzfläche 53 verhindert die Ein- und Ausschaltschutzvorrichtung immer noch den Durchfluß von Strömungsmittel. Erst bei weiterer Bewegung des Ringkolbens in Öffnungsstellung wird der Kolbenring 50 in eine Stellung verfahren, in welcher er Teile der Schlitze 58 freigibt.

Die Figur 8 zeigt die Ausführungsform der Ein- und Ausschaltschutzvorrichtung gemäß der Figur 7 der Erfindung in vollständig geöffneter Stellung. In dieser Figur sieht man, daß der Kolbenring 50 vollständig über die Schlitze 58 der Sitzring-Schlitzbuchse 54 hinaus bis zu dem der Sitzfläche 53 zugewandten Endabschnitt des Gehäuses 24 des Ringkolbens verfahren ist. In dieser Stellung gibt der Kolbenring somit die gesamte Schlitzfläche frei.

Die Figur 9 zeigt einen Öffnungen aufweisende zylinderförmigen Körper, wie er bei erfindungsgemäßen Ventilen verwendet werden kann. Dieser Körper, der auch ein Abschnitt einer der beschriebenen Schlitzbuchsen sein kann, enthält in seinem Mantel Schlitze 88, die zu einem Ende hin spitz zulaufen und sich in der anderen Längsrichtung stetig verbreitern. Alternativ oder auch gleichzeitig können auch Löcher 89 vorgesehen sein, die in einer Mantellinie des Zylinders gesehen mit jeweils einen größeren Durchmesser als das vorherrige Loch aufweisen.

In Figur 10 ist als ein solcher Körper 90 ein quadratisches Rohr dargestellt. Dieses kann an seiner Oberfläche Schlitze 91 und/oder runde Löcher 92 und/oder quadratische Löcher 93 und/oder rautenförmige Löcher 94 aufweisen. Die Figuren 9 und 10 sind lediglich schematisch dargestellt. Sie sollen aussagen, daß im Rahmen der vorliegenden Erfindung Körper verschiedener Form mit Löchern von beliebiger Form verwendet werden, je nach Art und Verwendungszweck des gewünschten Ventils.

**Patentansprüche**

1. Druckmindervorrichtung mit durch das hindurchströmende Medium gesteuertem Absperrkörper der Absperr/Freigabe-Einrichtung, mit zwei in geringem Abstand voneinander ineinander angeordneten, relativ zueinander bewegbaren Körpern, von denen einer der Absperrkörper oder ein mit diesem verbundener Körper ist, und von denen einer in seinem Umfangsbereich Öffnungen aufweist, die mit zunehmender Bewegung des Absperrkörpers in die volle Öffnungsstellung zunehmend freigegeben werden, dadurch gekennzeichnet, daß der geringe Abstand der relativ zueinander bewegbaren Körper (14, 46; 62, 70) von einem Dichtelement (50, 60) überbrückt ist, das an dem die Öffnungen (48, 58, 62, 74, 88–94) aufweisenden Körper gleitbar anliegt, und das so angeordnet ist, daß seine gleitbare Fläche in der Schließendstellung zumindest teilweise außerhalb des Bereichs der Öffnungen anliegt, so daß es sanft einsetzend den Durchfluß freizugeben beginnt und ihn bei weiterer Bewegung stetig zunehmend freigibt.

2. Druckmindervorrichtung nach Anspruch 1, dadurch gekennzeichnet, daß das Dichtelement (50, 60) mit einem der relativ zueinander bewegbaren Körper verschiebbar ist.

3. Druckmindervorrichtung nach Anspruch 1 oder 2, dadurch gekennzeichnet, daß einer der beiden Körper mit dem Sitz des Absperrkörpers (16) der Absperr/Freigabe-Einrichtung (14, 16) und der andere Körper mit dem Absperrkörper starr verbunden ist.

4. Druckmindervorrichtung nach einem der Ansprüche 1 bis 3, dadurch gekennzeichnet, daß das Dichtelement (50, 60) mit Spiel zwischen den beiden relativ zueinander bewegbaren Körpern (14, 16; 62, 70), gegen einen Körper anliegend vorgespannt ist.

5. Druckmindervorrichtung nach einem der Ansprüche 1 bis 4, dadurch gekennzeichnet, daß die beiden Körper längliche, sich in Strömungsrichtung erstreckende Körper sind.

6. Druckmindervorrichtung nach einem der Ansprüche 1 bis 5, dadurch gekennzeichnet, daß der eine Körper ein Teil der Wandung der Druckmindervorrichtung und der andere Körper ein von dem Absperrkörper vorstehender Abschnitt ist.

7. Druckmindervorrichtung nach einem der Ansprüche 1 bis 6, dadurch gekennzeichnet, daß die beiden Körper zylinderförmig ausgebildet sind.

8. Druckmindervorrichtung nach einem der Ansprüche 1 bis 7, dadurch gekennzeichnet, daß der Öffnungen (48, 58, 62, 74, 88–94) aufweisende Körper (46, 72) stromaufwärts von der Absperr/Freigabe-Einrichtung (14, 68; 16, 62) angeordnet ist.

9. Druckmindervorrichtung nach einem der Ansprüche 1 bis 8, dadurch gekennzeichnet, daß der Öffnungen (48, 58, 62, 74, 88–94) aufweisende Körper (46, 72) stromabwärts von der Absperr/Freigabe-Einrichtung (14, 68; 16, 62) angeordnet ist.

10. Druckmindervorrichtung nach einem der Ansprüche 1 bis 9, dadurch gekennzeichnet, daß das Dichtelement (50, 60) ein in einer Nut des einen Körpers liegender, gegen den anderen Körper vorgespannter Ring ist.

11. Druckmindervorrichtung nach einem der Ansprüche 6 bis 10, dadurch gekennzeichnet, daß die Öffnungen in dem von dem Absperrkörper vorstehenden Körper ausgebildet sind.

12. Druckmindervorrichtung nach einem der Ansprüche 1 bis 11, dadurch gekennzeichnet, daß als Dichtelement (50, 60) ein in einer Nut in dem Außenumfang des von dem Absperrkörper federnd gegen die innere Umfangsfläche des umgebenden Körpers vorgespannter, und an dieser gleitend anliegender Ring vorgesehen ist.

13. Druckmindervorrichtung nach einem der Ansprüche 1 bis 12, dadurch gekennzeichnet, daß das Dichtelement (50, 60) ein beliebig geformter, geeigneter Ring, z.B. ein geschlitzter massiver Ring oder ein aus mehreren zylindrisch gewickelten Lagen bestehender Ring ist.

14. Druckmindervorrichtung nach einem der Ansprüche 1 bis 13, dadurch gekennzeichnet, daß Öffnungen zum Dichtelement (50, 60) hin sich verjüngend ausgebildet sind.

15. Druckmindervorrichtung nach einem der Ansprüche 1 bis 14, dadurch gekennzeichnet, daß die dem Dichtelement (50, 60) zugewandten Ränder verschiedener Öffnungen von dem Dichtelement (50, 60) in verschiedenem Abstand angeordnet sind.

16. Druckmindervorrichtung nach einem der Ansprüche 1 bis 15, dadurch gekennzeichnet, daß die Öffnungen derart ausgebildet sind, daß die von dem Dichtelement (50, 60) freigegebene Querschnittsfläche mit zunehmender Öffnungsbewegung exponentiell zunimmt.

17. Druckmindervorrichtung nach einem der Ansprüche 1 bis 16, dadurch gekennzeichnet, daß in der das Dichtelement (50, 60) aufnehmenden Nut eine elastische, das Dichtelement (50, 60) radial nach außen vorspannende Dichtung vorgesehen ist.

18. Ventil mit durch das hindurchströmende Medium gesteuertem Absperrkörper der Absperr/Freigabe-Einrichtung, mit zwei in geringem Abstand voneinander ineinander angeordneten, relativ zueinander bewegbaren Körpern, von denen einer der Absperrkörper oder ein mit diesem verbundener Körper ist, und von denen einer in seinem Umfangsbereich Öffnungen aufweist, die mit zunehmender Bewegung des Absperrkörpers in die volle Öffnungsstellung zunehmend freigegeben werden, dadurch gekennzeichnet, daß der geringe Abstand der relativ zueinander bewegbaren Körper (14, 46; 62, 70) von einem Dichtelement (50, 60) überbrückt ist, das an dem die Öffnungen (48, 58, 62, 74, 88–94) aufweisenden Körper gleitbar anliegt, und das so angeordnet ist, daß seine gleitbare Fläche in der Schließendstellung zumindest teilweise außerhalb des Bereichs der Öffnungen anliegt, so daß es sanft einsetzend den Durchfluß freizugeben beginnt und ihn bei weiterer Bewegung stetig zunehmend freigibt.

19. Ventil nach Anspruch 18, dadurch gekennzeichnet, daß das Dichtelement (50, 60) mit einem der relativ zueinander bewegbaren Körper verschiebbar ist.

20. Ventil nach Anspruch 18 oder 19, dadurch gekennzeichnet, daß das Dichtelement (50, 60) mit Spiel zwischen den beiden relativ zueinander bewegbaren Körpern (14, 46; 62, 70), gegen einen Körper anliegend vorgespannt ist.

21. Ventil nach einem der Ansprüche 18 bis 20, dadurch gekennzeichnet, daß die beiden Körper längliche, sich in Strömungsrichtung erstreckende Körper sind.

22. Ventil nach einem der Ansprüche 18 bis 21, dadurch gekennzeichnet, daß die beiden Körper zylinderförmig ausgebildet sind.

23. Ventil nach einem der Ansprüche 18 bis 22, dadurch gekennzeichnet, daß das Dichtelement (50, 60) ein in einer Nut des einen Körpers liegender, gegen den anderen Körper vorgespannter Ring ist.

24. Ventil nach einem der Ansprüche 18 bis 23, dadurch gekennzeichnet, daß das Dichtelement (50, 60) ein beliebig geformter, geeigneter Ring, z.B. ein geschlitzter massiver Ring oder ein aus mehreren zylindrisch gewickelten Lagen bestehender Ring ist.

25. Ventil nach einem der Ansprüche 18 bis 24, dadurch gekennzeichnet, daß die Öffnungen zum Dichtelement (50, 60) hin sich verjüngend ausgebildet sind.

26. Ventil nach einem der Ansprüche 18 bis 25, dadurch gekennzeichnet, daß die dem Dichtelement (50, 60) zugewandten Ränder verschiedener Öffnungen von dem Dichtelement (50, 60) in verschiedenem Abstand angeordnet sind.

27. Ventil nach einem der Ansprüche 18 bis 26, gekennzeichnet durch schlitzförmig ausgebildete Öffnungen.

28. Ventil nach einem der Ansprüche 18 bis 27, dadurch gekennzeichnet, daß die Öffnungen derart ausgebildet sind, daß die von dem Dichtelement (50, 60) freigegebene Querschnittsfläche mit zunehmender Öffnungsbewegung exponentiell zunimmt.

29. Ventil nach einem der Ansprüche 18 bis 28, dadurch gekennzeichnet, daß in der das Dichtelement (50, 60) aufnehmenden Nut eine elastische, das Dichtelement (50, 60) radial nach außen vorspannende Dichtung vorgesehen ist.

30. Ventil nach einem der Ansprüche 18 bis 29, dadurch gekennzeichnet, daß es in Verbindung mit einem anderen oder in einem anderen Ventil integriert verwendet ist.

31. Ventil nach einem der Ansprüche 18 bis 30, dadurch gekennzeichnet, daß es als Ein- und Ausschaltschutzeinrichtung (46, 48, 50) in einem Druckminderventil integriert ist.

## Claims

1. Pressure-reducing device comprising a shutoff body of the shutoff/release means controlled by the medium flowing through, two bodies which are arranged within each other with slight spacing and movable relatively to each other and one of which is the shutoff body or a body connected thereto and one of which comprises in its peripheral region openings which are increasingly freed with increasing movement of the shutoff body into the full open position, characterized in that the slight spacing of the relatively movable bodies (14, 46; 62, 70) is bridged by a sealing element (50, 60) which slideably bears on the body having the openings (48, 58, 62, 74, 88–94) and which is so arranged that at least its slideable surface in the closure end position engages at least partially outside the region of the openings so that it begins to free the flow with gentle start and on further movement gradually increasingly frees said flow.

2. Pressure-reducing device according to claim 1, characterized in that the sealing element (50, 60) is displaceable with one of the bodies movable relatively to each other.

3. Pressure-reducing device according to claim 1 or 2, characterized in that one of the two bodies is rigidly connected to the seat of the shutoff body (16) of the shutoff/release means (14, 16) and the other body to the shutoff body.

4. Pressure-reducing device according to any one of claims 1 to 3, characterized in that the sealing element (50, 60) is biased with clearance between the two relatively movable bodies (14, 46; 62, 70) with respect to the one body.

5. Pressure-reducing device according to any one of claims 1 to 4, characterized in that the two bodies are elongated bodies extending in the flow direction.

6. Pressure-reducing device according to any one of claims 1 to 5, characterized in that the one body is part of the wall of the pressure-reducing device and the other body is a section projecting from the shutoff body.

7. Pressure-reducing device according to any one of claims 1 to 6, characterized in that the two bodies are made cylindrical.

8. Pressure-reducing device according to any one of claims 1 to 7, characterized in that the body (46, 72) comprising openings (48, 58, 62, 74, 88–94) is arranged upstream of the shutoff/release means (14, 68; 16, 62).

9. Pressure-reducing device according to any one of claims 1 to 8, characterized in that the body (46, 72) having the openings (48, 58, 62, 74, 88–94) is arranged downstream of the shutoff/release means (14, 68; 16, 62).

10. Pressure-reducing device according to any one of claims 1 to 9, characterized in that the sealing element (50, 60) is a ring which lies in a groove of the one body and is biased with respect to the other body.

11. Pressure-reducing device according to any one of claims 6 to 10, characterized in that the openings are formed in the body projecting from the shutoff body.

12. Pressure-reducing device according to any one of claims 1 to 11, characterized in that as sealing element (50, 60) a ring is provided which is biased in a groove in the outer periphery of the shutoff body resiliently against the inner peripheral surface of the surrounding body and bears slidingly on the latter.

13. Pressure-reducing device according to any one of claims 1 to 12, characterized in that the sealing element (50, 60) is a suitable ring of any desired shape, for example a slit solid ring or a ring consisting of a plurality of cylindrically wound layers.

14. Pressure-reducing device according to any one of claims 1 to 13, characterized in that openings are formed tapering towards the sealing element (50, 60).

15. Pressure-reducing device according to any one of claims 1 to 14, characterized in that edges of various openings facing the sealing element (50, 60) are arranged at different distances from said sealing element (50, 60).

16. Pressure-reducing device according to any one of claims 1 to 15, characterized in that the openings are formed in such a manner that the cross-sectional area freed by the sealing element (50, 60) increases exponentially with increasing opening movement.

17. Pressure-reducing device according to any one of claims 1 to 16, characterized in that in the groove receiving the sealing element (50, 60) a resilient seal is provided which radially outwardly biases the sealing element (50, 60).

18. Valve comprising a shutoff body of the shutoff/release means controlled by the medium flowing therethrough, two slightly spaced apart bodies arranged one within the other and movable relatively to each other, one of which is the shutoff body or a body connected thereto and one of which comprises in its peripheral region openings which are increasingly freed with increasing movement of the shutoff body into the completely open position, characterized in that the slight spacing of the relatively movable bodies (14, 46; 62, 70) is bridged by a sealing element (50, 60) which bears slideably on the body having the openings (48, 58, 62, 74, 88–94) and which is so arranged that its slideable surface in the closure end position engages at least partially outside the region of the openings so that it begins to release the flow with gentle start and gradually increasingly releases said flow on further movement.

19. Valve according to claim 18, characterized in that the sealing element (50, 60) is displaceable with one of the relatively movable bodies.

20. Valve according to claim 18 or 19, characterized in that the sealing element (50, 60) is biased with clearance between the two relatively movable bodies (14, 46; 62, 70) bearing against one body.

21. Valve according to any one of claims 18 to 20, characterized in that the two bodies are elongated bodies extending in the flow direction.

22. Valve according to any one of claims 18 to 21, characterized in that the two bodies are made cylindrical.

23. Valve according to any one of claims 18 to 22, characterized in that the sealing element (50, 60) is a ring which lies in a groove of the one body and is biased against the other body.

24. Valve according to any one of claims 18 to 23, characterized in that the sealing element (50, 60) is a suitable ring of any desired shape, for example a slit solid ring or a ring consisting of a plurality of cylindrically wound layers.

25. Valve according to any one of claims 18 to 24, characterized in that the openings are made tapering towards the sealing element (50, 60).

26. Valve according to any one of claims 18 to 25, characterized in that the edges of various openings facing the sealing element (50, 60) are arranged at a different distance from the sealing element (50, 60).

27. Valve according to any one of claims 18 to 26, characterized by slit-shaped openings.

28. Valve according to any one of claims 18 to 27, characterized in that the openings are formed in such a manner that the cross-sectional area released by the sealing element (50, 60) increases exponentially with increasing opening movement.

29. Valve according to any one of claims 18 to 28, characterized in that in the groove receiving the sealing element (50, 60) a resilient seal biasing the sealing element (50, 60) radially outwardly is provided.

30. Valve according to any one of claims 18 to 29, characterized in that it is used in conjunction with another valve or integrated into another valve.

31. Valve according to any one of claims 18 to 30, characterized in that it is integrated as activation and deactivation protection means (46, 48, 50) in a pressure-reducing valve.

## Revendications

1. Appareil de réduction de pression comprenant un organe obturateur du dispositif d'obturation-passage libre qui est commandé par le fluide qui traverse l'appareil, comprenant deux organes disposés l'un à l'intérieur de l'autre, à un petit écartement l'un de l'autre, mobiles l'un par rapport à l'autre, dont l'un est l'organe obturateur ou un organe lié à cet organe obturateur, et dont l'un présente dans sa région périphérique des ouvertures qui sont démasquées dans une mesure croissante avec la progression de l'organe obturateur dans le sens allant vers la position de pleine ouverture, caractérisé en ce que le petit écartement des organes (14, 46; 62, 70) qui sont mobiles l'un par rapport à l'autre est couvert par un élément d'étanchéité (50, 60) qui est en appui glissant contre l'organe qui présente les ouvertures (48, 58, 62, 74, 88 à 94) et qui est disposé de façon que, dans la position extrême de fermeture, sa surface glissante soit en appui au moins en partie à l'extérieur de la région des ouvertures, de sorte que cet organe commence à ouvrir le passage en amorçant progressivement, et l'ouvre dans une mesure toujours croissante dans la suite de son mouvement.

2. Appareil de réduction de la pression selon la revendication 1, caractérisé en ce que l'élément d'étanchéité (50, 60) se déplace en translation avec l'un des organes qui sont mobiles l'un par rapport à l'autre.

3. Appareil de réduction de la pression selon la revendication 1 ou 2, caractérisé en ce que l'un des deux organes est assemblé rigidement au siège de l'organe obturateur (16) du dispositif d'obturation-passage libre (14, 16) et l'autre organe à l'organe obturateur.

4. Appareil de réduction de la pression selon une des revendications 1 à 3, caractérisé en ce que l'élément d'étanchéité (50, 60) est monté libre entre les deux organes (14, 46; 62, 70) qui sont mobiles l'un par rapport à l'autre et appliqué contre l'un des organes avec précontrainte.

5. Appareil de réduction de la pression selon une des revendications 1 à 4, caractérisé en ce que les deux organes sont des organes allongés qui s'étendent dans la direction de l'écoulement.

6. Appareil de réduction de la pression selon une des revendications 1 à 5, caractérisé en ce que l'un des organes est une partie de la paroi de l'appareil de réduction de la pression et l'autre organe un segment qui fait saillie sur l'organe obturateur.

7. Appareil de réduction de la pression selon une des revendications 1 à 6, caractérisé en ce que les deux organes sont de configuration cylindrique.

8. Appareil de réduction de la pression selon une des revendications 1 à 7, caractérisé en ce que l'organe (46, 72) qui présente les ouvertures (48, 58, 62, 74, 88 à 94) est disposé en amont du dispositif d'obturation-passage libre (14, 68; 16, 62).

9. Appareil de réduction de la pression selon une des revendications 1 à 8, caractérisé en ce que l'organe (46, 72) qui présente des ouvertures (48, 58, 62, 74, 88 à 94) est disposé en aval du dispositif d'obturation-passage libre (14, 68; 16, 62).

10. Appareil de réduction de la pression selon une des revendications 1 à 9, caractérisé en ce que l'élément d'étanchéité (50, 60) est une bague logée dans une rainure de l'un des organes et qui est appuyée contre l'autre organe avec précontrainte.

11. Appareil de réduction de la pression selon une des revendications 6 à 10, caractérisé en ce que les ouvertures sont formées dans l'organe qui fait saillie sur l'organe obturateur.

12. Appareil de réduction de la pression selon une des revendications 1 à 11, caractérisé en ce qu'il est prévu, comme élément d'étanchéité (50, 60), une bague logée dans une gorge ménagée dans la périphérie extérieure de l'organe obturateur et est précontrainte élastiquement vers la surface périphérique intérieure de l'organe qui l'entoure, et est en appui glissant contre cet organe.

13. Appareil de réduction de la pression selon une des revendications 1 à 12, caractérisé en ce que l'élément d'étanchéité (50, 60) est une bague de forme quelconque appropriée, par exemple une bague massive fendue, ou une bague composée de plusieurs couches enroulées sous une forme cylindrique.

14. Appareil de réduction de la pression selon une des revendications 1 à 13, caractérisé en ce que les ouvertures sont d'une forme qui se rétrécit vers l'élément d'étanchéité (50, 60).

15. Appareil de réduction de la pression selon une des revendications 1 à 14, caractérisé en ce que les bords de différentes ouvertures qui sont dirigés vers l'élément d'étanchéité (50, 60) sont disposés à différentes distances de l'élément d'étanchéité (50, 60).

16. Appareil de réduction de la pression selon une des revendications 1 à 15, caractérisé en ce que les ouvertures sont d'une configuration telle que l'aire de section qui est dégagée par l'élément d'étanchéité (50, 60) croisse avec la progression du mouvement d'ouverture selon une relation exponentielle.

17. Appareil de réduction de la pression selon une des revendications 1 à 16, caractérisé en ce que, dans la gorge qui reçoit l'élément d'étanchéité (50, 60), est prévue une garniture d'étanchéité élastique qui exerce sur l'élément d'étanchéité (50, 60) une précontrainte dirigée radialement vers l'extérieur.

18. Valve équipée d'un organe obturateur du dispositif d'obturation-passage libre qui est commandée par le fluide qui traverse la valve, comprenant deux organes disposés l'un à l'intérieur de l'autre, à un petit écartement l'un de l'autre et qui peuvent se déplacer l'un par rapport à l'autre, dont l'un est l'organe obturateur ou un organe lié à cet organe obturateur et dont l'un présente dans sa région périphérique des ouvertures qui se dégagent dans une mesure croissante avec la progression du déplacement de l'organe obturateur dans le sens allant vers la position de pleine ouverture, caractérisée en ce que le petit écartement entre les deux organes (14, 46; 62, 70) qui sont mobiles l'un par rapport à l'autre est couvert par un élément d'étanchéité (50, 60) qui est en appui glissant contre l'organe qui présente les ouvertures (48, 58, 62, 74, 88 à 94) et qui est disposé de manière que, dans la position extrême de fermeture, sa surface glissante soit appuyée au moins partiellement en dehors de la région des ouvertures, de manière qu'il commence à dégager le passage en amorçant doucement et dégage ce passage avec une progression constante dans la suite du mouvement.

19. Valve selon la revendication 18, caractérisée en ce que l'élément d'étanchéité (50, 60) se déplace en translation avec l'un des organes qui sont mobiles l'un par rapport à l'autre.

20. Valve selon la revendication 18 ou la revendication 19, caractérisée en ce que l'élément d'étanchéité (50, 60) est monté avec jeu entre les deux organes (14, 46; 62, 70) qui peuvent se déplacer l'un par rapport à l'autre, en étant appliqué contre l'un des organes avec précontrainte.

21. Valve selon une des revendications 18 à 20, caractérisée en ce que les organes sont des organes de forme allongée qui s'étendent dans la direction de l'écoulement.

22. Valve selon une des revendications 18 à 21, caractérisée en ce que les deux organes sont de configuration cylindrique.

23. Valve selon une des revendications 18 à 22, caractérisée en ce que l'élément d'étanchéité (50, 60) est une bague logée dans une gorge d'un organe et qui est précontrainte vers l'autre organe.

24. Valve selon une des revendications 18 à 23, caractérisée en ce que l'élément d'étanchéité (50, 60) est une bague appropriée, de n'importe quelle configuration voulue, par exemple, une bague massive fendue ou une bague composée de plusieurs couches enroulées en une forme cylindrique.

25. Valve selon une des revendications 18 à 24, caractérisée en ce que les ouvertures sont d'une configuration qui se rétrécit vers l'élément d'étanchéité (50, 60).

26. Valve selon une des revendications 18 à 25, caractérisée en ce que les bords de différentes ouvertures qui sont dirigés vers l'élément d'étanchéité (50, 60) sont disposés à différentes distances de l'élément d'étanchéité (50, 60).

27. Valve selon une des revendications 18 à 26, caractérisée par des ouvertures en forme de fentes.

28. Valve selon une des revendications 18 à 27, caractérisée en ce que les ouvertures sont d'une configuration telle que la surface de section qui est dégagée par l'élément d'étanchéité (50, 60) croisse avec la progression du mouvement d'ouverture selon une relation exponentielle.

29. Valve selon une des revendications 18 à 28, caractérisée en ce que, dans la gorge qui reçoit l'élément d'étanchéité (50, 60), est prévue une garniture d'étanchéité élastique qui exerce sur l'élément d'étanchéité (50, 60) une précontrainte dirigée radialement vers l'extérieur.

30. Valve selon une des revendications 18 à 29, caractérisée en ce qu'elle est utilisée en combinaison avec une autre valve ou intégrée dans une autre valve.

31. Valve selon une des revendications 18 à 30, caractérisée en ce qu'elle est intégrée en qualité de dispositif de protection d'ouverture-fermeture (46, 48, 50) dans une valve de réduction de la pression.

30  32  33  38  40  34

42

10 →

14
50
48
22  25  24
18  16
20  21
46
12

34
36

23

EP 0 227 854 B1

Figur 1

Figur 2

Figur 3

EP 0 227 854 B1

Figur 4

72
84
74
62
60
61
64
68
70

82

EP 0 227 854 B1

Figur 5

EP 0 227 854 B1

Figur 6

Figur 7

Figur 8

Figur 9

Figur 10